# EUROPÄISCHE PATENTSCHRIFT

(11) **EP 1 103 150 B1**
(45) Veröffentlichungstag und Bekanntmachung des Hinweises auf die Patenterteilung: **10.04.2002**
(21) Anmeldenummer: 98955304.5
(22) Anmeldetag: 02.12.1998
(51) Int. Cl.: H04Q 7/22

(54) **TELEKOMMUNIKATIONSVERFAHREN UND GEEIGNETES SYSTEM, UM EINE VERBINDUNG MIT EINEM MOBILGERÄT AUFZUBAUEN**
TELECOMMUNICATION METHOD AND SUITABLE SYSTEM FOR ESTABLISHING A CONNECTION WITH A MOBILE STATION
PROCEDE DE TELECOMMUNICATION ET SYSTEME APPROPRIE POUR ETABLIR UNE COMMUNICATION AVEC UN APPAREIL MOBILE

(30) Priorität: 27.07.1998 CH 158598
(43) Veröffentlichungstag der Anmeldung: 30.05.2001
(73) Patentinhaber: Swisscom Mobile AG, 3050 Bern (CH)
(72) Erfinder: KOCH, Michael, CH-3032 Hinterkappelen (CH); HIRZEL, Werner, CH-3145 Niederscherli (CH); MEIER, Martin, CH-3006 Bern (CH); STADELMANN, Anton, Niklaus, CH-3065 Bolligen (CH)
(74) Vertreter: BOVARD AG - Patentanwälte
(86) Internationale Anmeldenummer: CH9800510
(87) Internationale Veröffentlichungsnummer: WO0007391

(56) Entgegenhaltungen:
- WO-A-97/19548
- WO-A-97/29609
- WO-A-97/40616
- WO-A-97/50237

## Beschreibung

Die vorliegende Erfindung betrifft ein Telekommunikationsverfahren und ein geeignetes System um eine Verbindung mit einem Mobilgerät aufzubauen, insbesondere betrifft sie ein Telekommunikationsverfahren und ein dafür geeignetes System um eine Verbindung mit einem Mobilgerät eines Teilnehmers aufzubauen, der sich in einem Visited-PLMN (Public Land Mobile Network) befindet, beispielsweise in einem ausländischen VPLMN.

Zur Berechnung der Kosten einer Telefonverbindung, sei es für Telefongespräche oder für die Datenübertragung, werden typischerweise sogenannte Call Data Records (CDR) an ein Verrechnungssystem (Billing System) übermittelt. Die berechneten Kosten, die von verschiedenen Parametern wie Zeitpunkt, Dauer, Ort oder Distanz abhängig sind, werden vom Billing System dem betreffenden Teilnehmer belastet. In einem Verfahren mit Vorauszahlung (prepaid) werden die Kosten von einem vorausbezahlten Betrag abgezogen, während in einem Verfahren mit nachträglicher Bezahlung (postpaid) die Kosten vom betreffenden Teilnehmer per Rechnung eingezogen werden. Insbesondere in einem GSM-Mobilfunknetz treffen die Call Data Records typischerweise erst nach einer zeitlichen Verzögerung zur Verrechnung beim Billing System ein. Bei Call Data Records vom Ausland kann diese Verzögerung durchaus noch länger betragen. Für Prepaid-Systeme ist diese Verzögerung problematisch, weil es dadurch für einen Teilnehmer möglich ist, während dieser Verzögerungszeit gratis zu telefonieren, wenn sein vorausbezahlter Kredit eigentlich schon abgelaufen wäre. Lösungen in denen der Kredit eines Teilnehmers direkt und in Echtzeit beispielsweise auf seiner ins Mobilgerät eingeführten SIM-Karte nachgeführt wird, gelten bei vielen Betreibern als zu unsicher, weil sie glauben, dass solche Karten anfällig für betrügerische Manipulationen sind. Im Allgemeinen wird das Problem von den Netzwerkbetreibem so umgangen, dass ausgehende Anrufe (Originating Calls) eines mobilen Teilnehmers, der in einem VPLMN stationiert ist, beispielsweise ein ausländisches PLMN, gesperrt werden, zum Beispiel im HLR des HPLMN des mobilen Teilnehmers. Für die betroffenen mobilen Teilnehmer ist diese Lösung verständlicherweise unbefriedigend.

In der Patentanmeldung WO 97/29609 wird ein Verfahren für die Erstellung einer Sprachverbindung zwischen einem Teilnehmer eines Mobilfunknetzes und einem Gesprächspartner auf dem Sprachkanal eines mobilen Endgeräts beschrieben, in welchem Verfahren für den Gesprächsaufbau erforderliche Daten über einen zusätzlichen, für das Endgerät zugreifbaren Datenkanal, insbesondere der SMS-Kanal (Short Message Services), übertragen werden. Gemäss dem in WO 97/29609 beschriebenen Verfahren erfolgt der Gesprächsaufbau über einen mit dem Endgerät verbundenen Kontrolirechner, der eine über den Datenkanal erhaltene Rufnummer selbsttätig anwählt oder eine Datenmitteilung zur Initiierung einer Sprachverbindung durch eine Gegenstelle an diese Gegenstelle sendet.

In der Patentanmeldung WO 97/50237 wird ein Verfahren und ein System für die Validierung einer Weiterleitungsnummer innerhalb eines mobilen Telekommunikationssystems beschrieben. Gemäss dem in WO 97/50237 beschriebenen Verfahren wird von einer Mobilstation eine Weiterleitungsanforderung mittels einer USSD-Meldung (Unstructured Supplementary Services Data) über einen Datenkanal an eine Mobilvermittlungsstelle (Mobile Switching Center, MSC) übertragen, welche Mobilvermittlungsstelle durch einen Rückruf an die Mobilstation und durch einen Anruf an das der Weiterleitungsnummer zugeordnete Telefonendgerät eine Sprachverbindung zwischen der Mobilstation und dem Telefonendgerät erstellt, so dass der mobile Teilnehmer die Weiterleitungsnummer mündlich überprüfen kann.

Es ist eine Aufgabe dieser Erfindung, ein neues und besseres Telekommunikationsverfahren und ein geeignetes System vorzuschlagen, welche es insbesondere ermöglichen, eine Verbindung mit einem Mobilgerät eines Teilnehmers aufzubauen, der sich in einem Visited-PLMN (VPLMN) befindet.

Gemäss der vorliegenden Erfindung wird dieses Ziel insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor. In der vorliegenden Erfindung wird zudem die Aufgabe gelöst, mit einem mobilen Teilnehmer in einem VPLMN eine vorausbezahlte (prepaid) Verbindung aufzubauen.

Insbesondere werden diese Ziele durch die Erfindung dadurch erreicht, dass ein anrufender mobiler Teilnehmer in einem VPLMN eine Kurzmeldung mit der gewünschten Zielnummer eines anzurufenden Teilnehmers vorbereitet und abschickt, welche Zielnummer an einen Callback-Computer weitergeleitet wird, der eine Verbindung zwischen dem Mobilgerät des anrufenden Teilnehmers und der gewünschten Zielnummer aufbaut.

Vorzugsweise wird eine Verbindung mit dem Mobilgerät eines angerufenen mobilen Teilnehmers in einem VPLMN von einem Callback-Computer aufgebaut, wobei die Nummer dieses Callback-Computers im Home Location Register diesem angerufenen mobilen Teilnehmer zugeordnet ist

Erfindungsgemäss wird vor dem Aufbau einer Verbindung der verbleibende Kredit des mobilen Teilnehmers im VPLMN in einem mit dem Callback-Computer verbundenen Prepaid-Modul überprüft und die Verbindung wird nur aufgebaut, falls dieser Kredit ausreicht Diese Kreditüberprüfung des mobilen Teilnehmers kann unabhängig davon ausgeführt werden, ob der Anruf vom mobilen Teilnehmer im VPLMN ausgeht (Originating Call) oder ob dieser mobile Teilnehmer im VPLMN angerufen wird (Terminating Call).

Vorzugsweise berechnet das genannte Prepaid-Modul die verbleibende Sendezeit (Airtime) des mobilen Teilnehmers mit Hilfe mindestens einer Tariftabelle und leitet sie an den Callback-Computer weiter.

Vorzugsweise berechnet das genannte Prepaid-Modul die verbleibende Sendezeit (Airtime) des mobilen Teilnehmers auf Grund der in einer Datenbank gespeicherten Ortsangabe dieses Teilnehmers, wobei diese Datenbank vorzugsweise das Home Location Register (HLR) des Home-PLMN (HPLMN) des mobilen Teilnehmers und die Ortsangabe die VLR-Addresse dieses Teilnehmers ist.

In einer Ausführungsvariante wird die Verbindung vom Callback-Computer abgebrochen, falls der verbleibende Kredit des mobilen Teilnehmers abgelaufen ist.

In einer Ausführungsvariante ist das genannte Mobilgerät ein GSM-Gerät, z.B. ein GSM-Mobilfunktelefon, und die genannte Kurzmeldung eine USSD-Meldung.

In einer Ausführungsvariante können Prepaid-Beträge für mindestens gewisse mobile Teilnehmer im Prepaid-Modul gespeichert werden.

Vorzugsweise können im Home Location Register für mindestens gewisse Teilnehmer unterschiedliche Konfigurationen für Visited-PLMN und Home-PLMN gespeichert werden.

Vorzugsweise kann das Prepaid-Modul über ein MAP-Protokoll mit dem Home Location Register verbunden werden, welches MAP-Protokoll den Inhalt einer an ein Home Location Register geleiteten Kurzmeldung, beispielsweise eine USSD-Meldung, übernehmen und zusammen mit der in diesem Home Location Register gespeicherten Rufnummer und Ortsangabe des Teilnehmers, der die Kurzmeldung gesendet hat, weiterleiten kann.

In einer Ausführungsvariante greift das MAP-Interface mittels dem MAP-Protokoll über das Signalisierungssystem Nummer 7 (SS7) auf das Home Location Register zu.

Nachfolgend wird eine Ausführung der vorliegenden Erfindung anhand eines Beispieles beschrieben. Das Beispiel der Ausführung wird durch folgende beigelegte Figur illustriert:
Fig. 1 zeigt ein schematisches Datenflussdiagramm, welches den Datenfluss beim Verbindungsaufbau zwischen einem Mobilgerät und einem Teilnehmer im öffentlichen vermittelten Telefonnetz (PSTN) illustriert.
Fig. 2 zeigt ein schematisches Datenflussdiagramm, welches den Datenfluss beim Verbindungsaufbau zwischen einem angerufenen Mobilgerät und einem anrufenden Teilnehmer im öffentlichen vermittelten Telefonnetz (PSTN) illustriert.

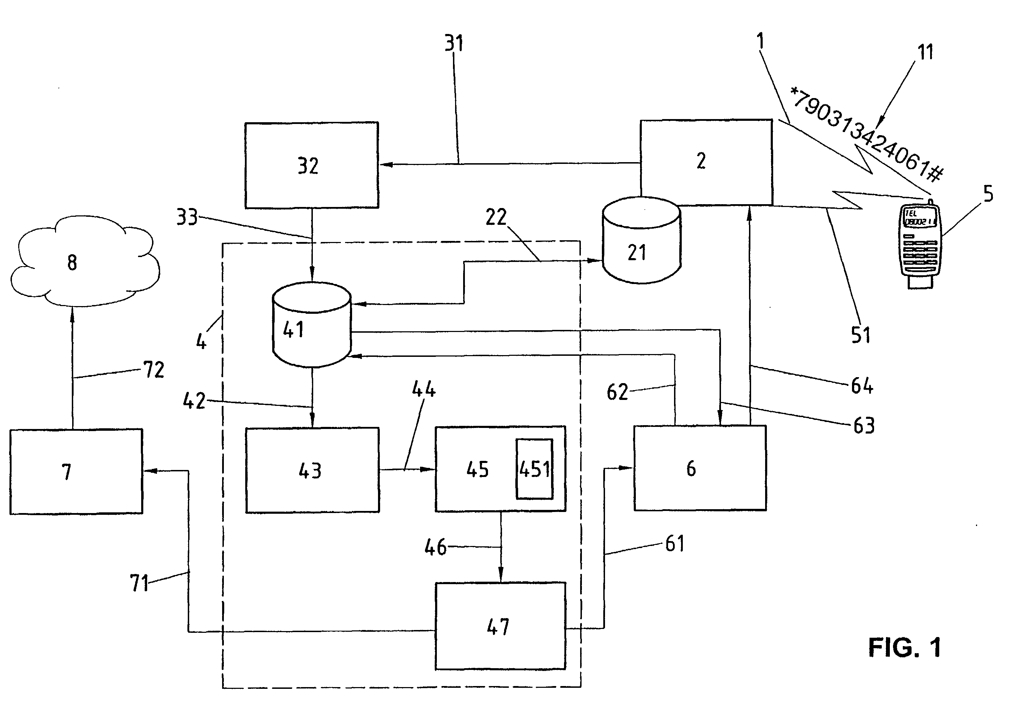

In der Figur 1 bezieht sich das Bezugszeichen 5 auf ein Mobilgerät, insbesondere ein Mobilfunktelefon 5, zum Beispiel ein Mobilfunktelefon vom Typ GSM oder UMTS oder von einem anderen Typ. Die mit dem Bezugszeichen 1 bezeichnete Verbindung illustriert schematisch die Übermittlung einer Kurzmeldung 11 vom Mobilgerät 5 an eine Schaltzentrale 2 für den Mobilfunk, ein sogenanntes Mobile Switching Center 2 (MSC). Insbesondere zeigt die mit dem Bezugszeichen 11 bezeichnete Kurzmeldung ein Beispiel einer Zieinummer, die in einer vom Benutzer des Mobilgerätes 5, das heisst vom mobilen Teilnehmer, vorbereiteten USSD-Kurzmeldung 11 an das Mobile Switching Center 2 übermittelt wird. Wie in diesem Beispiel gezeigt wird, kann die Kurzmeldung 11, hier eine USSD-Kurzmeldung 11, so abgefasst werden, dass sie ein ein- oder mehrstelliges, beispielsweise ein dreistelliges, Präfix aufweist, das zur Identifikation eines speziellen Dienstes verwendet wird. Dieses Präfix kann zum Beispiel von einem anrufenden Teilnehmer über die Eingabemittel des Mobilgerätes 5 eingegeben werden, oder es kann vom Mobilgerät 5 automatisch eingefügt werden. Im letzteren Fall kann dies zum Beispiel von einem dafür vorgesehenen Programm auf einer entfembar mit dem Mobilgerät 5 verbundenen SIM-Karte ausgeführt werden, wobei dieses Programm zum Beispiel vom anrufenden Teilnehmer mittels einer speziellen Taste des Mobilgeräts 5 gestartet werden kann. In einer anderen Variante kann das Programm auch automatisch auf der SIM-Karte gestartet werden, wenn detektiert wird, dass der anrufende Teilnehmer sich in einem VPLMN befindet für welches alle ausgehenden Anrufe gesperrt sind, und wenn dieser Sachverhalt der SIM-Karte mitgeteilt wird. Nach dem Präfix kann die Kurzmeldung 11 entsprechend dem speziellen Dienst weitere Informationen enthalten, in unserem Beispiel die Zielnummer des Teilnehmers, den der anrufende Teilnehmer mit seinem Mobilgerät 5 anrufen möchte. Die Zielnummer kann zum Beispiel vom anrufenden Teilnehmer durch ziffernweise Eingabe oder durch Drücken von einer oder mehreren Schnellwähltasten (vorprogrammierte Rufnummern) eingegeben werden. Im Falle der USSD-Meldung 11 kann der Teilnehmer zum Beispiel die gesamte Kurzmeldung 11 durch Eingeben des Zeichens *, des Präfixes, der Zielnummer, sowie des Zeichens # abfassen und abschicken. In einer anderen Variante kann das oben erwähnte Programm auf der SIM-Karte aufgestartet werden, welches vom anrufenden Teilnehmer die Eingabe der Zielnummer verlangt (ziffernweise oder mittels Schnellwähltasten) und die vollständige Kurzmeldung 11, hier eine USSD-Meldung, mit dem Präfix und der Zielnummer verfasst und abschickt.

In der Annahme, dass sich der anrufende (mobile) Teilnehmer nicht im Gebiet seines Home Public Land Mobile Network (HPLMN), sondern in einem Visited Public Land Mobile Network (VPLMN) befindet, wird das MSC 2, das die vom anrufenden Teilnehmer abgeschickte Kurzmeldung 11 empfängt, diesen anrufenden Teilnehmer, beispielsweise mittels Rückfrage an das Home Location Register 41 (HLR) des HPLMN's des anrufenden Teilnehmers gemäss dem GSM-Standard identifizieren und die Kurzmeldung 11, beispielsweise eine USSD-Kurzmeldung 11, wie durch die Pfeile 31 und 33 angedeutet, beispielsweise über Signalling Transfer Points (STP) 32, bis an das HLR 41 des HPLMN's des anrufenden Teilnehmers weiterleiten.

Das Bezugszeichen 43 bezeichnet ein Interface-Modul, welches auf dem Mobile Application Part (MAP) Protokoll basiert und mittels diesem MAP-Protokoll über das Signalisierungssystem Nummer 7 (SS7) auf das Home Location Register 41 zugreifen kann. Von diesem Interface-Modul 43, welches wir im folgenden auch als MAP-Interface bezeichnen, wird die in die USSD-Kurzmeldung 11 verpackte Zielnummer, die Rufnummer des anrufenden Teilnehmers, der die Kurzmeldung 11 verfasste und abschickte, das heisst seine Mobile Subscriber ISDN Nummer (MSISDN), sowie eine Ortsangabe dieses Teilnehmers, wie mit den Pfeilen 42 und 44 angedeutet, vom HLR 41 an ein Prepaid (Roaming) Modul 45 weitergeleitet. Die Ortsangabe kann beispielsweise eine im HLR 41 gespeicherte VLR-Adresse sein, das heisst die Nummer des Visitor Location Registers 21 (VLR) beim MSC 2, in dessen Gebiet sich der anrufende Teilnehmer befindet. In einer Variante kann die Ortsangabe eine präzisere Angabe sein, welche durch das HLR 41 vom VLR 21 des anrufenden Teilnehmers abgefragt werden kann.

Für den Fachmann gibt es verschiedene Varianten das HLR 41, das MAP-Interface 43 und das Prepaid-Modul 45 auf einem gemeinsamen oder auf separaten Computern, beispielsweise handelsübliche Server, als Softwareprogramme zu realisieren. Die Funktionen des standardmässigen HLR 41 im HPLMN des anrufenden Teilnehmers werden zusätzlich so erweitert, dass unterschiedliche Konfigurationen für VPLMN's, z.B. ein ausländisches PLMN, und HPLMN's gespeichert werden können. Diese Konfigurationen können beispielsweise als unterschiedliche Teilnehmerprofile abgespeichert werden, die durch verschiedene Präfixe unterschieden werden können.

Das Prepaid-Modul 45, ein vom Fachmann realisiertes Software Modul in einem Server, überprüft den Kredit des mittels der MSISDN identifizierten anrufenden Teilnehmers. Der dazu erforderliche abgespeicherte Prepaid-Betrag des betreffenden Teilnehmers wird zum Beispiel von einem nicht dargestellten Prepaid-Billing System (PPB) bezogen, welches zusammen mit dem Prepaid-Modul 45 auf einem gemeinsamen Computer oder auf einem separaten, aber, beispielsweise über TCP-IP, verbundenen Computer realisiert ist. In einer anderen Variante sind die abgespeicherten Prepaid-Beträge direkt im Prepaid-Modul 45 gespeichert. Auf Grund des berechneten Kredits des anrufenden Teilnehmers und mit Hilfe von mindestens einer abgespeicherten Tariftabelle 451 berechnet das Prepaid-Modul 45, das heisst das entsprechende Softwareprogramm, die verbleibende Sendezeit (Airtime) unter Berücksichtigung der Ortsangabe des anrufenden Teilnehmers, zum Beispiel die VLR-Adresse. Wie mit dem Pfeil 46 gezeigt wird, leitet das Prepaid-Modul 45 die Zielnummer, die Rufnummer des anrufenden Teilnehmers, das heisst dessen MSISDN, sowie die verbleibende Sendezeit (Airtime) an einen Callback-Computer 47.

Der Callback-Computer 47 ist vorzugsweise ein handelsüblicher Callback-Computer, der mittels eines Rückrufs (Callback) an den anrufenden Teilnehmer eine Verbindung zwischen diesem und einem von diesem angerufenen Teilnehmer aufbauen kann. Der Callback-Computer 47 kann zum Beispiel über TCP/IP mit dem Prepaid-Modul 45 verbunden sein oder der Fachmann kann entscheiden, das Prepaid-Modul 45 direkt auf dem Callback-Computer 47 zu implementieren. Der Fachmann wird verstehen, dass je nach Ausführungsvariante die Schnittstelle zum Callback-Computer 47 sowie einige Funktionen des Callback-Computers 47 angepasst werden müssen. Wenn zum Beispiel die Entscheidung ob die vom Prepaid-Modul 45 berechnete verbleibende Sendezeit (Airtime) des anrufenden Teilnehmers ausreicht um eine Verbindung aufzubauen, beispielsweise durch einen Vergleich mit einem vordefinierten Wert, im Callback-Computer 47 getroffen wird, muss eine entsprechende Funktion hinzugefügt werden, falls sie nicht standardmässig im handelsüblichen Callback-Computer verfügbar ist. In einer Variante kann diese Entscheidung auch dem anrufenden Teilnehmer überlassen werden, indem diesem die verbleibende Sendezeit (Airtime) übermittelt und beispielsweise auf der Anzeige des Mobilgerätes 5 dargestellt oder akustisch wiedergegeben wird und von ihm die Eingabe einer Antwort mittels der Bedienungselemente des Mobilgeräts 5 gefordert wird. Die Übermittlung kann beispielsweise mittels Kurzmeldungen, zum Beispiel SMS- oder USSD Kurzmeldungen, oder mittels Interactive Voice Response (IVR) erfolgen. In einer anderen Ausführungsvariante kann dieser Entscheid allerdings schon im Prepaid-Modul 45 getroffen werden.

Falls entschieden wird, dass ein Verbindungsaufbau durchgeführt werden soll erfolgt dies typischerweise folgendermassen. Der Callback-Computer 47 überprüft die Zielnummer und ergänzt die Rufnummer des anrufenden Teilnehmers mit einem Präfix, um, wie oben erwähnt, anzuzeigen, dass es sich um einen Teilnehmer in einem VPLMN handelt. In einer Variante wird dem Callback-Computer 47 die MSISDN vom Prepaid-Modul 45 direkt mit diesem Präfix übergeben. Anschliessend wird, wie mit dem Pfeil 61 dargestellt, ein standardmässiger Anruf über einen MSC 6 aufgebaut. Wie mit dem Pfeil 62 dargestellt, fragt das MSC im HLR 41 die temporäre Roaming Nummer ab, worauf im HLR 41 auf Grund des Präfixes erkannt wird, dass es sich um einen Teilnehmer handelt, der in einem VPLMN, zum Beispiel im Ausland, stationiert ist. Wie durch den Pfeil 63 angedeutet wird, wird dem MSC 6 die temporäre Roaming Nummer übermittelt und der Anruf zum anrufenden Teilnehmer im VPLMN wird vom MSC 6, wie durch die Pfeile 64 und 51 angedeutet, über das MSC 2 aufgebaut. Je nach Ausführungsvariante und/oder Funktionsweise des betreffenden Callback-Computers 47 wird gleichzeitig mit dem Anruf zum angerufenen Teilnehmer oder unmittelbar nachdem der anrufende Teilnehmer den ankommenden Anruf entgegengenommen hat, vom Callback-Computer 47 die Zielnummer via MSC 7 und via das öffentliche vermittelte Telefonnetz 8 (PSTN) angerufen, wie dies mit den Pfeilen 71 und 72 angedeutet wird. Damit wird die Verbindung zwischen dem anrufenden Teilnehmer im VPLMN und der Zielnummer im PSTN 8 erstellt, sobald der über die Zielnummer erreichte Teilnehmer den Anruf entgegennimmt.

Nach Beendigung der Verbindung, zum Beispiel nach dem Gesprächsende oder nach dem Ende der Datenübertragung, werden die entsprechenden Gesprächsdaten (Verbindungsdaten) vom Callback-Computer 47 an das Prepaid-Modul 45 übermittelt. In einer Variante kann der Callback-Computer, beispielsweise zusammen mit einer entsprechenden IVR Vorwarnung an beide Teilnehmer, die Verbindung unterbrechen, wenn die verbleibende Sendezeit (Airtime) des anrufenden Teilnehmers abgelaufen ist. Auf Grund der erhaltenen Gesprächsdaten wird das Prepaid-Modul 45 den verbrauchten Betrag abbuchen. Dem anrufenden Teilnehmer wird der neue Kreditstand auf der SIM-Karte mittels SMS- oder USSD-Kurzmeldungen nachgeführt, in einer Variante wird dies eventuell erst zu einem späteren Zeitpunkt gemacht, wenn der betreffende Teilnehmer sich wieder im HPLMN befindet.

An dieser Stelle sollte erwähnt werden, dass in einer anderen Ausführungsvariante des oben beschrieben Verfahrens die Verbindung ohne Kreditprüfung und Sendezeitberechnung aufgebaut wird. Diese letztere Variante wird in einer Postpaid-Variante des Verbindungsaufbaus bevorzugt, in welcher das beschriebene MAP-Interface 43 direkt mit dem Callback-Computer 47 verbunden ist und diesem die Zielnummer und die MSISDN, eventuell mit Präfix, übermittelt. Nach dem Verbindungsende werden die Verbindungsdaten vom Callback-Computer 47 zur Verrechnung einem nicht dargestellten Billing System übergeben.

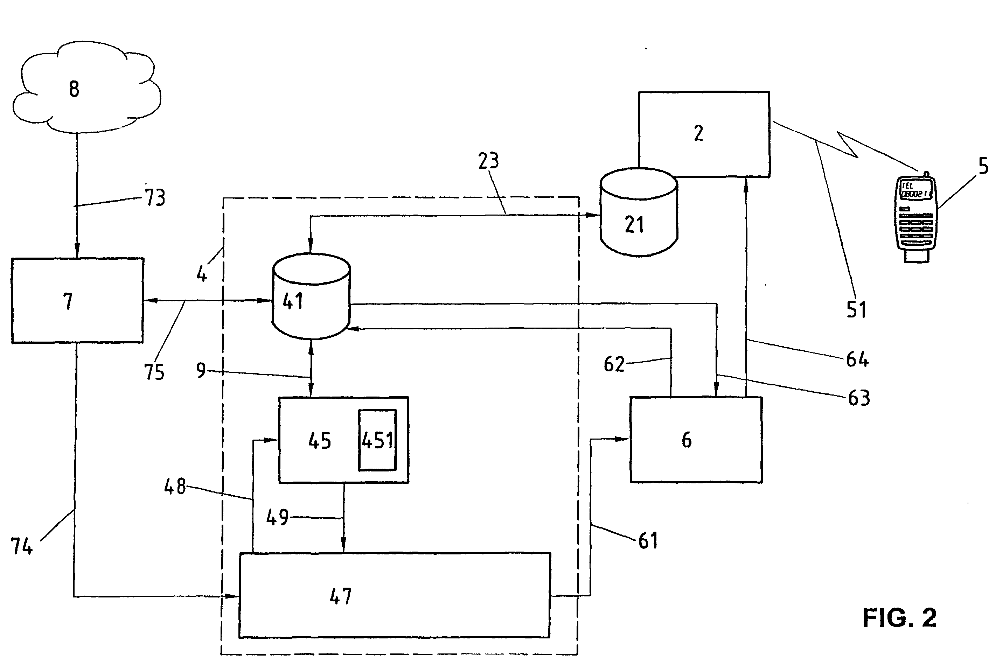

Bisher wurde anhand der Figur 1 die Behandlung eines Anrufs von einem mobilen Teilnehmer aus einem VPLMN, zum Beispiel aus dem Ausland, behandelt (Originating Call). Im folgenden soll anhand der Figur 2 die Behandlung eines Anrufs an einen mobilen Teilnehmer in einem VPLMN, zum Beispiel im Ausland, beschrieben werden (Terminating Call).

Der Anruf von einem Teilnehmer im öffentlichen geschalteten Telefonnetz (PSTN) 8 an einen angerufenen mobilen Teilnehmer wird, wie durch den Pfeil 73 dargestellt, über ein MSC 7 aufgebaut. Das MSC 7 fragt im HLR 41, wie mit dem Pfeil 75 dargestellt, die Routing Information ab. Auf Grund des oben beschriebenen unterschiedlichen Teilnehmerprofils für einen Teilnehmer, der in einem VPLMN, zum Beispiel im Ausland, stationiert ist, wird dem anfragenden MSC 7 vom HLR 41 an Stelle der Roaming Nummer die Fix-Nummer des Callback-Computers 47 übermittelt. Somit wird, wie mit dem Pfeil 73 angedeutet, der Anruf vom MSC 7 direkt an den Callback-Computer 47 weitergeleitet. Wie mit dem Pfeil 48 dargestellt liefert der Callback-Computer 47 die Rufnummer des angerufenen Teilnehmers, das heisst dessen MSISDN Nummer an das Prepaid-Modul 45. Wie mit dem Pfeil 9 angedeutet wird, fragt das Prepaid-Modul 45 im HLR 41 mit der MSISDN des angerufenen Teilnehmers dessen entsprechende Ortsangabe ab, zum Beispiel die VLR-Adresse. Diese Abfrage erfolgt beispielsweise mittels dem MAP-Protokoll. In einer Variante kann die Ortsangabe eine präzisere Angabe sein, welche durch das HLR 41 vom VLR 21 des anrufenden Teilnehmers abgefragt werden kann. In einer weiteren Variante wird die Ortsangabe vom HLR 41 schon bei der mit dem Pfeil 75 dargestellten Anfrage durch das MSC 7 zusammen mit der Fix-Nummer des Callback-Computers 47 übergeben.

Das Prepaid-Modul 45 überprüft den Kredit des mittels der MSISDN identifizierten angerufenen Teilnehmers. Der dazu erforderliche abgespeicherte Prepaid-Betrag des betreffenden Teilnehmers wird zum Beispiel von einem nicht dargestellten Prepaid-Billing System (PPB) bezogen, welches zusammen mit dem Prepaid-Modul 45 auf einem gemeinsamen Computer oder auf einem separaten aber, beispielsweise über TCP-IP, verbundenen Computer realisiert ist. In einer anderen Variante sind die abgespeicherten Prepaid-Beträge direkt im Prepaid-Modul 45 gespeichert. Der Kredit des angerufenen Teilnehmers im VPLMN wird deshalb berechnet, weil dieser Teilnehmer für die Kosten der Verbindung ausserhalb seines HPLMN's aufkommen muss. Die Kosten für diesen Verbindungsteil werden üblicherweise nicht dem anrufenden Teilnehmer belastet, da dieser nicht über den Aufenthaltsort dieses angerufenen Teilnehmers informiert ist und nicht wissen kann, dass er einen Anruf in ein VPLMN, zum Beispiel im Ausland, eingeleitet hat. Auf Grund des berechneten Kredits des angerufenen Teilnehmers und mit Hilfe von mindestens einer abgespeicherten Tariftabelle 451 berechnet das Prepaid-Modul 45, das heisst das entsprechende Softwareprogramm, die verbleibende Sendezeit (Airtime) unter Berücksichtigung der Ortsangabe des angerufenen Teilnehmers, zum Beispiel die VLR-Adresse. Wie mit dem Pfeil 49 gezeigt wird, leitet das Prepaid-Modul 45 die verbleibende Sendezeit (Airtime) an den Callback-Computer 47.

Wie oben erwähnt ist der Callback-Computer 47 vorzugsweise ein handelsüblicher Callback-Computer, der zum Beispiel über TCPIIP mit dem Prepaid-Modul 45 verbunden ist. Der Fachmann wird verstehen, dass je nach Ausführungsvariante die Schnittstelle zum Callback-Computer 47 sowie einige Funktionen des Callback-Computers 47 angepasst werden müssen. Die Entscheidung ob die vom Prepaid-Modul 45 berechnete verbleibende Sendezeit (Airtime) des angerufenen Teilnehmers ausreicht um eine Verbindung aufzubauen, beispielsweise durch einen Vergleich mit einem vordefinierten Wert, kann zum Beispiel im Callback-Computer 47 oder im Prepaid-Modul 45 getroffen werden und muss im Callback-Computer 47 als entsprechende Funktion hinzugefügt werden, falls sie nicht standardmässig im handelsüblichen Callback-Computer verfügbar ist. In einer Variante kann diese Entscheidung auch dem angerufenen Teilnehmer überlassen werden, indem diesem die verbleibende Sendezeit (Airtime) übermittelt und beispielsweise auf der Anzeige des Mobilgerätes 5 dargestellt oder akustisch wiedergegeben wird und von ihm die Eingabe einer Antwort mittels der Bedienungselemente des Mobilgeräts 5 gefordert wird. Wie oben beschrieben kann die Übermittlung beispielsweise mittels Kurzmeldungen, zum Beispiel SMS- oder USSD Kurzmeldungen, oder mittels Interactive Voice Response (IVR) erfolgen.

Falls entschieden wird, dass ein Verbindungsaufbau durchgeführt werden soll, erfolgt dies typischerweise wie oben für den Verbindungsaufbau vom Calback-Computer 47 über die MSC 6 und 2 beschrieben wurde.

Nach Beendigung der Verbindung werden die entsprechenden Gesprächsdaten (Verbindungsdaten) vom Callback-Computer 47 wiederum zur Verrechnung des verbrauchten Betrages an das Prepaid-Modul 45 übermittelt. Auch in diesem Beispiel, kann der Callback-Computer in einer Variante, beispielsweise zusammen mit einer entsprechenden IVR Vorwarnung an beide Teilnehmer, die Verbindung unterbrechen, wenn die verbleibende Sendezeit (Airtime) des angerufenen Teilnehmers abgelaufen ist. Dem angerufenen Teilnehmer wird der neue Kreditstand auf der SIM-Karte mittels SMS- oder USSD-Kurzmeldungen nachgeführt. In einer Variante wird dies eventuell erst zu einem späteren Zeitpunkt gemacht, wenn der betreffende Teilnehmer sich wieder im HPLMN befindet.

Auch in diesem Beispiel kann in einer Ausführungsvariante die Verbindung ohne Kreditprüfung und Sendezeitberechnung aufgebaut werden, wobei diese letztere Variante in einer Postpaid-Variante des Verbindungsaufbaus bevorzugt wird, in welcher der Callback-Computer 47 direkt nach Erhalt der MSISDN des angerufenen Teilnehmers vom MSC 7, eventuell mit Präfix, die Verbindung aufbaut und nach dem Verbindungsende die Verbindungsdaten zur Verrechnung einem nicht dargestellten Billing System übergibt.

Generell gilt es zu erwähnen, dass in beiden beschriebenen Beispielen grundsätzlich mehrere Callback-Computer 47 vorhanden sein können, welche beispielsweise auch im Ausland installiert sein können.

Das vorgeschlagene Verfahren und das dazu geeignete System sind vor allem für Netzwerkbetreiber nützlich, die mit anderen Netzwerkbetreibern, zum Beispiel in anderen Ländern, Roaming Übereinkommen getroffen haben und die ihren Kunden eine Lösung anbieten wollen, die es diesen erlaubt auch von einem VPLMN aus mit ihren Mobilgeräten Gespräche zu führen oder Daten zu transferieren und die dafür eventuell auch Prepaid-Dienste benutzen möchten. Netzwerkbetreiber, die über das vorgeschlagene System zur Ausführung des vorgeschlagenen Verfahrens verfügen, können zudem ihren Kunden auch wahlweise die beschriebenen Prepaid- und/oder Postpaid-Dienste in gewissen oder sämtlichen VPLMN's anbieten, mit denen sie ein Roaming Übereinkommen getroffen haben, beispielsweise indem sie den betreffenden Kunden im HLR entsprechend konfigurieren. Die Netzwerkbetreiber können zudem den interessierten mobilen Teilnehmern das beschriebene Verfahren in einer entsprechenden Variante als zusätzliche Verbindungsaufbaumöglichkeit in deren HPLMN anbieten.

Neben dem Verkauf von Gesamtsystemen kann es auch interessant sein, Systemkomponenten separat zu vertreiben, zum Beispiel Datenträger mit darauf gespeicherten Programmen zur Steuerung von Computern, beispielsweise handelsübliche Server, gemäss dem beschriebenen Verfahren. Zum Beispiel ein Datenträger mit einem Programm zur Ausführung eines HLR 41 mit den entsprechenden Anpassungen gemäss dem vorgeschlagenen Verfahren, und/oder mit einem Programm zur Ausführung des beschriebenen MAP-Interfaces 43, und/oder mit einem Programm zur Ausführung des Prepaid-Moduls 45, und/oder mit einem Programm zur Steuerung des beschriebenen Callback-Computers 47.

An dieser Stelle sollten auch die Vorteile der USSD-Meldungen bei der Ausführung des beschriebenen Verfahrens erwähnt werden. Da die USSD-Meldungen als Signalisierungsdaten übertragen werden, werden sie sehr effizient, das heisst schnell, und üblicherweise kostenfrei übertragen. Wie schon oben erwähnt wurde, werden die USSD-Meldungen zudem nicht gesperrt, auch wenn ausgehende Anrufe und/oder SMS-Meldungen gesperrt sind. Des weiteren ist es für Teilnehmer viel einfacher in ihrem Mobilgerät eine USSD-Meldung einzugeben als beispielsweise eine SMS-Kurzmeldung.

Wie bereits oben erwähnt wurde kann die USSD-Kurzmeldung 11 so abgefasst werden, dass sie ein Präfix aufweist, das zur Identifikation eines speziellen Dienstes verwendet wird, und dass nach dem Präfix, entsprechend dem speziellen Dienst, weitere Informationen folgen, beispielsweise die oben beschriebene Zielnummer des Teilnehmers, den ein anrufender Teilnehmer mit seinem Mobilgerät 5 anrufen möchte. Ein weiteres Beispiel eines solchen speziellen Dienstes ist das Aufladen oder Nachladen einer Datenträgerkarte mit einem Geldbetragswert.

In der veröffentlichten Patentanmeldung EP 827 119 A1 wird ein Verfahren zum Aufladen oder Nachladen einer Datenträgerkarte mit einem Geldbetragswert beschrieben. Gemäss dem in EP 827 119 A1 beschriebenen Verfahren wird der Verkaufswert einer an sehr vielen Verkaufsstellen verfügbaren Wertkarte auf eine bestimmte Datenträgerkarte, insbesondere eine SIM-Karte, nach- oder aufgeladen, nachdem ein sich auf dieser Wertkarte befindender Code an eine Dienstzentrale übertragen wurde. Dieser Code befindet sich unter einer Abdeckung und kann durch Wegkratzen der abdeckenden Schicht freigelegt werden. Nach dem Anrufen einer bestimmten Dienstnummer wird unter der Führung eines Sprachservers dieser Dienstzentrale der Code in das Mobilfunktelefon eingetippt und an diese Dienstzentrale übermittelt. Der Identifikationscode des Teilnehmers wird dabei auch übermittelt, entweder automatisch ab der SIM-Karte des Teilnehmers oder ebenfalls durch Eintippen unter der Führung des Sprachservers. Als Alternative wird in EP 827 119 A1 erwähnt, dass anstelle der Eingabe der Daten mittels der Dienstnummer eine Kurzmeldung nach dem GSM-Standard verwendet werden kann. In der Dienstzentrale wird der übermittelte Code der Wertkarte in einer Datenbank überprüft, in welcher sämtliche Codes und die zugeordneten Geldbetragswerte, für die jemals Wertkarten erstellt worden sind, abgespeichert sind. Wird der eingetippte und übermittelte Code in der Datenbank gefunden, so wird eine GSM-Kurzmeldung vorbereitet, die den Identifikationscode des Teilnehmers und den Geldbetragswert enthält, und in einer Kurzmeldungsservicezentrale abgelegt. In der Datenbank wird dabei der Code der Wertkarte mit dem zugeordneten Geldwertbetrag als gebraucht markiert oder gelöscht. Wenn die Datenträgerkarte, beispielsweise die SIM-Karte, in einem Kommunikationsgerät steckt und eine Verbindung mit dem Kommunikationsnetz aufgebaut wird, wird die aufoder nachzuladende Datenträgerkarte mit dem Geldbetragswert mittels der vorbereiteten GSM-Kurzmeldung auf- oder nachgeladen.

Wie schon oben angetönt wurde kann ein solches Verfahren zum Auf- oder Nachladen einer Datenträgerkarte mit einem Geldbetragswert als weiterer spezieller Dienst mittels einer USSD-Meldung initiiert werden, die vom Teilnehmer einfacher eingegeben werden kann als, beispielsweise, eine SMS-Kurzmeldung und die üblicherweise kostenfrei über die Signalisierung übertragen werden kann. Konkret heisst dies, dass ein spezielles Präfix diesen speziellen Auf- oder Nachladedienst anzeigt, und dass die diesen Dienst betreffende, auf das Präfix folgende Information den Code der Wertkarte umfasst, der beispielsweise vom betreffenden Teilnehmer mittels der Eingabemittel seines Mobilgeräts 5 eingetippt wird. Die so vorbereitete USSD-Meldung kann, beispielsweise wie in Figur 1 dargestellt, vom Mobilgerät des Teilnehmers über ein HLR 41 und, wie mit den Pfeilen 42 und 44 angedeutet, über ein MAP-Interface 43 zusammen mit der Identifikation des Teilnehmers, der die USSD-Meldung sendete, an eine Dienstzentrale 45 übermittelt werden, von wo aus dann das Nach- oder Aufladen der in das Mobilgerät 5 eingeführten SIM-Karte mit dem der Wertkarte entsprechenden Geldbetragswert wie im Verfahren, welches in EP 827 119 A1 beschrieben wurde, durchgeführt werden kann.

## Patentansprüche

1. Telekommunikationsverfahren um eine Verbindung mit dem Mobilgerät (5) eines Teilnehmers aufzubauen, in welchem Telekommunikationsverfahren eine in einer vom Teilnehmer vorbereiteten Kurzmeldung (11) übermittelte gewünschte Zielnummer an einen Callback-Computer (47) weitergeleitet wird, und in welchem Telekommunikationsverfahren von diesem Callback-Computer (47) eine Verbindung zwischen dem genannten Mobilgerät (5) des Teilnehmers und der genannten gewünschten Zielnummer aufgebaut wird, **dadurch gekennzeichnet,**
**dass** vor dem Aufbau der genannten Verbindung der verbleibende Kredit des genannten Teilnehmers in einem mit dem Callback-Computer (47) verbundenen Prepaid-Modul (45) überprüft wird, und dass die genannte Verbindung nur aufgebaut wird, falls dieser Kredit ausreicht.

2. Telekommunikationsverfahren gemäss vorhergehendem Anspruch, **dadurch gekennzeichnet, dass** das genannte Prepaid-Modul (45) die verbleibende Sendezeit mit Hilfe mindestens einer Tariftabelle (451) berechnet und an den genannten Callback-Computer (47) weiterleitet

3. Telekommunikationsverfahren gemäss vorhergehendem Anspruch, **dadurch gekennzeichnet, dass** das genannte Prepaid-Modul (45) die genannte Sendezeit auf Grund der in einer Datenbank (41) gespeicherten Ortsangabe des genannten Teilnehmers berechnet

4. Telekommunikationsverfahren gemäss vorhergehendem Anspruch, **dadurch gekennzeichnet, dass** die genannte Datenbank (41) das Home Location Register (41) des HPLMN des genannten Teilnehmers und die Ortsangabe die VLR-Adresse des genannten Teilnehmers ist.

5. Telekommunikationsverfahren gemäss einem der vorhergehenden Ansprüche, **dadurch gekennzeichnet, dass** die genannte Verbindung vom genannten Callback-Computer (47) abgebrochen wird, falls der verbleibende Kredit des genannten Teilnehmers abgelaufen ist.

6. Telekommunikationsverfahren gemäss einem der vorhergehenden Ansprüche, **dadurch gekennzeichnet, dass** das genannte Mobilgerät (5) ein GSM-Gerät (5) ist und dass die genannte Kurzmeldung (11) eine USSD-Meldung (11) ist.

7. System (4) um eine Verbindung mit dem Mobilgerät (5) eines Teilnehmers aufzubauen, welches System Kurzmeldungen (11) empfangen kann und den Teilnehmer, der diese Kurzmeldungen (11) gesendet hat, identifizieren kann, welches System einen Callback-Computer (47) umfasst, der eine Verbindung zwischen dem genannten Teilnehmer und einer in der genannten Kurzmeldung (11) angegebenen Zielnummer aufbauen kann, **dadurch gekennzeichnet,**
**dass** es ein Prepaid-Modul (45) umfasst, welches mit dem genannten Callback-Computer (47) verbunden ist und in welchem ein Prepaid-Betrag für mindestens gewisse Teilnehmer gespeichert werden kann, und
**dass** das genannte Prepaid-Modul (45) mindestens eine Tariftabelle (451) enthält, mit welcher die verbleibende Sendezeit berechnet werden kann.

8. System (4) gemäss vorhergehendem Anspruch, **dadurch gekennzeichnet, dass** das genannte Prepaid-Modul (45) über ein MAP-Interface (43) mit einem Home Location Register (41) des Systems (4) verbunden werden kann.

9. System (4) gemäss einem der Ansprüche 7 oder 8, **dadurch gekennzeichnet, dass** das Prepaid-Modul (45) die verbleibende Sendezeit eines genannten Teilnehmers auf Grund von in einem Home Location Register (41) des Systems (4) gespeicherten Ortsangaben des genannten Teilnehmers und mit Hilfe der genannten Tariftabelle (451) berechnen und an den genannten Callback-Computer (47) weiterleiten kann.

10. System (4) gemäss einem der Ansprüche 7 bis 9, **dadurch gekennzeichnet, dass** das genannte Mobilgerät (5) ein GSM-Gerät (5) ist, und dass die genannte Kurzmeldung (11) eine USSD-Meldung (11) ist

11. System (4) gemäss einem der Ansprüche 7 bis 10, **dadurch gekennzeichnet, dass** es ein interface-Modul (43) umfasst, welches den Inhalt einer an ein Home Location Register (41) geleiteten Kurzmeldung (11) übernehmen und zusammen mit der in diesem Home Location Register (41) gespeicherten Rufnummer und Ortsangabe des Teilnehmers, der die genannte Kurzmeldung (11) gesendet hat, weiterleiten kann.

12. System (4) gemäss vorhergehendem Anspruch, **dadurch gekennzeichnet, dass** das Interface-Modul (43) mittels dem MAP-Protokoll über das SS7 Signalisierungssystem auf das Home Location Register (41) zugreift und dass die genannte Kurzmeldung (11) eine USSD-Meldung (11) ist

## Claims

1. Telecommunications method for establishing a connection with the mobile device (5) of a participant, in which telecommunications method a desired destination number transmitted in a short message (11) prepared by the participant is passed on to a call-back computer (47), and in which telecommunications method a connection is established by this call-back computer (47) between the said mobile device (5) of the participant and the said desired destination number, **characterised in that**
before establishment of the said connection, the remaining credit of the said participant is checked in a prepaid module (45) connected to the call-back computer (47), and the said connection is established only if this credit suffices.

2. Telecommunications method according to the preceding claim, **characterised in that** the said prepaid module (45) calculates the remaining airtime with the aid of at least one tariff table (451) and passes it on to the said call-back computer (47).

3. Telecommunications method according to the preceding claim, **characterised in that** the said prepaid module (45) calculates the said airtime on the basis of the indication of location of the said participant stored in a database (41).

4. Telecommunications method according to the preceding claim, **characterised in that** the said database (41) is the home location register (41) of the HPLMN of the said participant and the indication of location is the VLR address of the said participant.

5. Telecommunications method according to one of the preceding claims, **characterised in that** the said connection is truncated by the said call-back computer (47) if the remaining credit of the said participant has run out.

6. Telecommunications method according to one of the preceding claims, **characterised in that** the said mobile device (5) is a GSM device (5) and **in that** the said short message (11) is a USSD message (11).

7. System (4) for establishing a connection with the mobile device (5) of a participant, which system can receive short messages (11) and can identify the participant who has sent these short messages (11), which system comprises a call-back computer (47), which can establish a connection between the said participant and a destination number indicated in the said short message (11), **characterised in that**
it comprises a prepaid module (45) which is connected to the said call-back computer (47) and in which a prepaid amount can be stored for at least certain participants, and
the said prepaid module (45) contains at least one tariff table (451) with which the remaining airtime can be calculated.

8. System (4) according to the preceding claim, **characterised in that** the said prepaid module (45) can be connected to a home location register (41) of the system (4) via a MAP interface (43).

9. System (4) according to one of the claims 7 or 8, **characterised in that** the prepaid module (45) can calculate the remaining airtime of a said participant on the basis of indications of location of the said participant stored in a home location register (41) of the system (4) and with the aid of the said tariff table (451), and can pass it on to the said call-back computer (47).

10. System (4) according to one of the claims 7 to 9, **characterised in that** the said mobile device (5) is a GSM device (5), and **in that** the said short message (11) is a USSD message (11).

11. System (4) according to one of the claims 7 to 10, **characterised in that** it comprises an interface module (43), which can take over the contents of a short message (11) sent to a home location register (41), and can pass it on together with the call number and location indication, stored in this home location register (41), for the participant who has sent the short message (11).

12. System (4) according to the preceding claim, **characterised in that** the interface module (43) accesses the home location register (41) by means of the MAP protocol via the SS7 signalling system, and **in that** the said short message (11) is a USSD message (11).

## Revendications

1. Procédé de télécommunication servant à établir une liaison avec un appareil mobile (5) d'un abonné, procédé dans lequel un numéro de destination désiré communiqué dans un message court (11) préparé par l'abonné est transmis à un ordinateur de rappel automatique (47), et dans lequel cet ordinateur de rappel automatique (47) établit une liaison entre l'appareil mobile (5) mentionné de l'abonné et le numéro de destination désiré, **caractérisé en ce que**
avant l'établissement de la liaison mentionnée, le crédit restant de l'abonné dans un module à prépaiement (45) relié à l'ordinateur de rappel automatique (47) est vérifié, et que la liaison n'est établie que si ce crédit est suffisant.

2. Procédé de télécommunication selon la revendication précédente, **caractérisé en ce que** le module à prépaiement (45) calcule le temps d'émission restant à l'aide d'au moins un tableau de tarifs (451) et le transmet à l'ordinateur de rappel automatique (47).

3. Procédé de télécommunication selon la revendication précédente, **caractérisé en ce que** le module à prépaiement (45) calcule le temps d'émission en question sur la base de l'indication de position de l'abonné enregistrée dans une banque de données (41).

4. Procédé de télécommunication selon la revendication précédente, **caractérisé en ce que** la banque de données (41) est le Home Location Register (41) [enregistreur de position de rattachement] du HPLMN [réseau mobile terrestre public de rattachement] de l'abonné mentionné et que l'indication de position est l'adresse VLR [adresse de l'ELV ou enregistreur de localisation pour visiteurs] de l'abonné.

5. Procédé de télécommunication selon l'une des revendications précédentes, **caractérisé en ce que** à l'ordinateur de rappel automatique (47) coupe la liaison mentionnée si le crédit restant de l'abonné est épuisé.

6. Procédé de télécommunication selon l'une des revendications précédentes, **caractérisé en ce que** l'appareil mobile (5) est un appareil GSM (5) et que le message court (11) est un message USSD (11).

7. Système (4) destiné à établir une liaison avec l'appareil mobile (5) d'un abonné, ce système pouvant recevoir des messages courts (11) et identifier l'abonné qui a envoyé ces messages courts (11) et comprenant un ordinateur de rappel automatique (47) qui peut établir une liaison entre l'abonné mentionné et un numéro de destination indiqué dans le message court (11), **caractérisé en ce**
**qu'**il comprend un module à prépaiement (45) qui est relié à à l'ordinateur de rappel automatique (47) et dans lequel une somme prépayée peut être enregistrée au moins pour certains abonnés, et en ce
**que** le module à prépaiement (45) contient au moins un tableau de tarifs (451) avec lequel le temps d'émission restant peut être calculé.

8. Système (4) selon la revendication précédente, **caractérisé en ce que** le module à prépaiement (45) peut être relié, par l'intermédiaire d'une interface MAP (3), à un Home Location Register (41) [enregistreur de position de rattachement] du système (4).

9. Système (4) selon la revendication 7 ou 8, **caractérisé en ce que** le module à prépaiement (45) peut calculer, et transmettre à l'ordinateur de rappel automatique (47), le temps d'émission restant d'un abonné, sur la base d'indications sur sa position enregistrées dans un Home Location Register (41) du système (4) et à l'aide du tableau de tarifs (451) mentionné.

10. Système (4) selon l'une des revendications 7 à 9, **caractérisé en ce que** l'appareil mobile (5) mentionné est un appareil GSM (5) et **en ce que** le message court (11) est un message USSD (11).

11. Système (4) selon l'une des revendications 7 à 10, **caractérisé en ce qu'**il comprend un module d'interface (43) qui est en mesure de prendre en charge le contenu d'un message court (11) amené à un Home Location Register (41) et de le transmettre avec le numéro d'appel enregistré dans ce Home Location Register (41) et l'indication de position de l'abonné qui a envoyé le message court (11) en question.

12. Système (4) selon la revendication précédente, **caractérisé en ce que** le module d'interface (43) se connecte au Home Location Register (41), par l'intermédiaire du système de signalisation SS7, au moyen du protocole MAP, et **en ce que** le message court (11) est un message USSD (11).
